# EUROPÄISCHE PATENTANMELDUNG

(11) **EP 2 886 013 A2**
(43) Veröffentlichungstag der Anmeldung: **24.06.2015**
(21) Anmeldenummer: 14198424.5
(22) Anmeldetag: 17.12.2014
(51) Int. Cl.: A47B 96/20

(54) **Möbelbauplatte**

(30) Priorität: 19.12.2013 DE 102013022143
(71) Anmelder: ALNO Aktiengesellschaft, 88630 Pfullendorf (DE)
(72) Erfinder: Ossiander, Ralph, 86926 Greifenberg (DE)
(74) Vertreter: Otten, Roth, Dobler & Partner

(57) **Zusammenfassung**

Die Erfindung betrifft eine Möbelbauplatte (M1), welche eine Kernschicht (3), mindestens eine Dekorschicht (1, 4), mindestens eine Glasschicht (5) und mindestens eine Dampfsperrschicht (2) umfasst, wobei die Dampfsperrschicht (2) bzw. mindestens eine der Dampfsperrschichten (2) zwischen der Kernschicht (3) und der Dekorschicht (1, 4) bzw. einer der Dekorschichten (1, 4) angeordnet ist.

## Beschreibung

Es sind Möbelbauplatten bekannt, welche eine vorder- und rückseitig mit einer Dekorschicht beschichtete Pressspanplatte und eine Glasplatte umfassen, welche mit einer der Dekorschichten Verbunden ist. Derartige Möbelbauplatten zeigen nach einiger Zeit einen Verzug, welcher insbesondere an einer Wölbung der mit der Dekorschicht überzogenen Pressspanplatte erkennbar ist und insbesondere bei einer Verwendung der Möbelbauplatte als Türelement für einen Schrank zu einer ungewünschten Veränderung des Schließverhaltens und der Optik der Tür führt.

Es ist Aufgabe der Erfindung, eine Möbelbauplatte vorzuschlagen, welche über ihre Lebensdauer verzugfrei bleibt bzw. die Einlagerung von Feuchtigkeit verhindert.

Die erfindungsgemäße Möbelbauplatte, welche insbesondere als Möbelfrontplatte in Form einer Türe oder Klappe oder Blende ausgebildet ist, umfasst eine Kernschicht, mindestens eine Dekorschicht, mindestens eine Glasschicht und mindestens eine Dampfsperrschicht, wobei die Dampfsperrschicht bzw. mindestens eine der Dampfsperrschichten zwischen der Kernschicht und der Dekorschicht bzw. einer der Dekorschichten angeordnet ist. Hierdurch ist gewährleistet, dass die Möbelbauplatte auch auf eine glasplattenfreien Rückseite hinreichende Dampfsperreigenschaften aufweist, welche die Kernschicht derart vor Feuchtigkeit schützen, dass sich diese weder verformt noch ungewünschte Feuchtigkeitseinlagerungen gebildet werden können. Kern der Erfindung ist somit, eine Möbelbauplatte, durch den gezielten Einsatz wenigstens einer Dampfsperrschicht gegen Feuchtigkeitsschäden abzusichern.

Es ist ebenfalls erfindungsgemäß vorgesehen, anstatt einer Glasplatte einen anderen naturähnlichen oder naturidentischen flüssigkeitsundurchlässigen Werkstoff wie Keramik oder Naturstein an der Vorderfläche bzw. anstelle oder ergänzend zu der Glasplatte vorzusehen.

Es ist weiterhin vorgesehen, die Möbelbauplatte mit einer Randeinfassung auszustatten, wobei die Randeinfassung die Kernschicht und die Dekorschicht, welche eine Rückfläche bildet, und insbesondere auch die Dampfsperrschicht, welche zwischen der die Rückfläche bildenden Dekorschicht und der Kernschicht liegt, und insbesondere auch die Dampfsperrschicht, welche zwischen der Glasschicht und der Kernschicht liegt, und insbesondere auch die Dekorschicht, welche zwischen der Glasschicht und der Kernschicht liegt, derart umläuft, dass die Randeinfassung zwischen einer Frontfläche und einer Rückfläche alle Seitenflächen der Möbelbauplatte bildet, wobei die Randeinfassung insbesondere eine Dampfsperrschicht und insbesondere eine Dekorschicht und/oder eine Glasschicht umfasst. Durch eine derartige Maßnahme wird insbesondere bei der Aufnahme einer Dampfsperrschicht wie diese bei geeigneter Ausführung auch durch die Dekorschicht und/oder die Glasschicht gebildet ist, der Eigenschutz der Möbelfrontplatte gegen Feuchtigkeitsschäden weiter erhöht, so dass die Möbelfrontplatte zum Beispiel auch in der Nähe von dampferzeugenden Geräten wie zum Beispiel Wasserkochern zum Einsatz kommen kann.

Es ist auch vorgesehen, die Dekorschicht und/oder die Glasschicht der Randeinfassung flächenbündig in die Glasschicht übergehen zu lassen und die Dekorschicht mit einer Stoßfläche an der Glasschicht anzulegen, wobei die Stoßfläche, mit welcher die Dekorschicht und/oder die Glasschicht der Randeinfassung an der Glasschicht anliegt, parallel zu der Frontfläche der Möbelbauplatte ausgerichtet ist, und weiterhin die Dekorschicht und/oder die Glasschicht der Randeinfassung flächenbündig in die die Rückfläche bildende Dekorschicht übergehen zu lassen, wobei die Stoßfläche, mit welcher die Dekorschicht und/oder die Glasschicht der Randeinfassung an der die Rückfläche bildenden Dekorschicht anliegt, orthogonal zu der Frontfläche der Möbelbauplatte ausgerichtet ist. Durch eine derartige Kapselung ist die Kernschicht der Möbelfrontplatte besonders gut Feuchtigkeit geschützt, da durch die flächenbündigen Übergänge und die fluchtend hinter der Glasschicht angeordnete Randeinfassung keine Gefahr besteht, dass die Kernschicht schon bei leichten Beschädigungen der Glasschicht oder der Randeinfassung - wie diese im Alltag auftreten können - derart beschädigt wird, dass die Kernschicht Feuchtigkeit aufnimmt.

Weiterhin ist es vorgesehen, die Glasschicht mit einer umlaufenden Fase auszugestalten, wobei die Fase umlaufend wenigstens 1 mm von der Randeinfassung beabstandet ist. Durch diese Beabstandung ist ein flächenbündiger Übergang zwischen der Glasschicht und der Randeinfassung gewährleistet, bei welchem die aneinanderstoßenden Außenflächen in einer Ebene liegen. Weiterhin wird hierdurch trotzdem eine scharfkantige Ausführung der Glasschicht, welche insbesondere durch eine Glasplatte gebildet ist, vermieden.

Es ist ebenso vorgesehen, zwischen der Kernschicht und der die Kernschicht umlaufenden Dekorschicht oder der die Kernschicht umlaufenden Glasschicht die Dampfsperre derart umlaufend anzuordnen, dass diese eine umlaufende Seitenfläche der Kernschicht vollständig überdeckt. Hierdurch wird zusätzlich zu dem Feuchtigkeitsschutz, welchen die umlaufende Dekorschicht bietet, die Kapselung der Möbelfrontplatte verbessert.

Es ist auch vorgesehen, die Möbelbauplatte mit wenigstens einer Beschlagaufnahme auszustatten, wobei die Beschlagaufnahme durch eine Dampfsperrschicht gegenüber der Kernschicht abgedichtet ist. Hierdurch wird sichergestellt, dass auch die Anordnung von Beschlägen, welche zum Beispiel als Scharniere ausgebildet sind, keine Gefahr einer Feuchtigkeitszunahme in der Kernschicht mit sich bringt.

Es ist insbesondere vorgesehen, die Möbelbauplatte bezüglich einer Schichtenfolge derart aufzubauen, dass Möbelbauplatte als Rückfläche eine Dekorschicht umfasst und dass darauf aufbauend eine Dampfsperrschicht, eine Kernschicht, eine Dekorschicht und eine Glasschicht angeordnet werden, wobei die Glasschicht die Frontfläche bildet. Eine derartige Möbelbauplatte weist durch die zwischen der die Rückenfläche bildenden Dekorschicht und der Kernschicht angeordnete Dampfsperrschicht die oben genannten Vorteile auf. Durch den Verzicht auf eine zweite Dampfsperrschicht zu der mit der Glasplatte verbundenen Dekorschicht hin, ist es möglich, die Kosten für die Möbelbauplatte niedrig zu halten, da die Erfahrung zeigt, dass die Glasplatte bei entsprechender Applikation einen hinreichenden Schutz für die Kernschicht bilden kann.

Es ist insbesondere auch vorgesehen, die Möbelbauplatte bezüglich einer Schichtenfolge derart aufzubauen, dass Möbelbauplatte als Rückfläche eine Dekorschicht umfasst und dass darauf aufbauend eine Dampfsperrschicht, eine Kernschicht, eine Dampfsperrschicht, eine Dekorschicht und eine Glasschicht angeordnet werden, wobei die Glasschicht die Frontfläche bildet. Eine derartige Möbelbauplatte schützt durch den Einbau von zwei Dampfsperrschichten die Kernschicht besonders zuverlässig. Ein derartiger Aufbau ist insbesondere für Möbelbauplatten vorteilhaft, welche optional für die Ausrüstung bzw. Nachrüstung mit einer Glasschicht als Frontfläche vorgesehen sind, da durch die zweite Dampfsperrschicht sicher gestellt ist, dass die Kernschicht der Möbelfrontplatte in der Zeit, in welcher diese noch keine Glasschicht umfasst, vor Feuchtigkeit geschützt ist.

Weiterhin ist es auch vorgesehen, die Möbelbauplatte bezüglich einer Schichtenfolge derart aufzubauen, dass Möbelbauplatte als Rückfläche eine Dekorschicht umfasst und dass darauf aufbauend eine Dampfsperrschicht, eine Kernschicht, eine Dampfsperrschicht und eine Glasschicht angeordnet werden, wobei die Glasschicht die Frontfläche bildet. Durch einen Verzicht auf eine Dekorschicht zwischen der Kernschicht und der Glasschicht können die Herstellungskosten gesenkt werden. Dies ist insbesondere dann möglich, wenn die Glasschicht blickdicht ist oder wenn eine Sichtbarkeit der Kernschicht gewünscht ist.

Schließlich ist es auch noch vorgesehen, die Möbelbauplatte bezüglich einer Schichtenfolge derart aufzubauen, dass Möbelbauplatte als Rückfläche eine Dekorschicht umfasst und dass darauf aufbauend eine Dampfsperrschicht, eine Kernschicht, und eine Glasschicht angeordnet werden, wobei die Glasschicht die Frontfläche bildet. Durch die ausschließliche Einlage einer Dampfsperrschicht zwischen die Kernschicht und die Glasschicht wird ein zuverlässiger Schutz der Kernschicht vor Feuchtigkeit erreicht. Ein derartiger Aufbau ist insbesondere dann möglich, wenn die Glasschicht blickdicht ist oder wenn eine Sichtbarkeit der Dampfsperrschicht gewünscht ist.

Es ist auch vorgesehen, die wenigstens eine Glasschicht als beschichtete Glasschicht oder als bezüglich ihrer Farbgebung und/oder Struktur und/oder Lichtdurchlässigkeit behandelte Glasschicht auszubilden. Hierdurch können unter der Glassicht beliebig aussehende Dekorschichten bzw. Dampfsperrschichten verwendet werden, ohne dass die Einfluss auf das Aussehen des Endprodukts hat. Hierdurch ist es zur Einsparung von Kosten möglich Restbestände zu verarbeiten.

Hinsichtlich der Kernschicht ist es vorgesehen, diese als Holzplatte oder als MDF-Platte oder als Pressspanplatte auszubilden oder diese als Wabenplatte aus einem Faserstoff und/oder einem Metall, insbesondere Aluminium und/oder aus Kunststoff und/oder aus einem geschäumten Stoff auszubilden oder diese als Sandwichplatte auszubilden. Die Verwendung von Pressspanplatte ermöglicht eine kostengünstige Herstellung stark belastbarer Möbelbauplatten. Wabenplatten haben den Vorteil, dass diese es ermöglichen, das Gesamtgewicht der Möbelbauplatte niedrig zu halten. Sandwichplatten sind insbesondere für Möbelbauplatten geeignet, welche als große Türen von Möbelfronten zu Einsatz kommen, da diese bei vergleichsweise niedrigem spezifischem Gewicht eine hohe Eigenstabilität aufweisen.

Hinsichtlich der Ausführung der Dampfsperrschicht ist es vorgesehen, diese als Metallschicht, insbesondere Aluminiumschicht bzw. Beschichtung oder als Kunststoffschicht oder als Membranschicht auszubilden. Metallschichten bilden eine hoch wirksame und gegen Beschädigungen unempfindliche Dampfsperrschicht, welche sich gut an die Kernschicht anformen lässt. Auch Kunststoffschichten bilden zuverlässige Dampfsperren, welche sich auch aufstreichen oder aufsprühen lassen. Membranschichten, welche in eine Richtung dampfdurchlässig sind, weisen den Vorteil auf, dass ggf. in der Kernschicht vorhandene Feuchtigkeit wieder an die Umgebung abgegeben werden kann und bringen somit z.B. bei einer durch eingelagerte Feuchtigkeit beschädigten Möbelbauplatte den Vorteil mit, dass diese die Feuchtigkeit wieder abgeben kann und somit einer weitergehenden Schädigung vorgebeugt wird.

Bezüglich der Dekorschicht ist es vorgesehen, diese als Kunststoffschicht und insbesondere als Polyethylen-Schicht auszubilden. Derartige Schichten lassen sich einfach verarbeiten und sind in einer Vielzahl von Dekoren am Markt verfügbar, so dass mit geringem Aufwand eine Vielzahl unterschiedlich aussehender Möbelbauplatten herstellbar ist.

Schließlich ist es vorgesehen in der Randeinfassung und/oder in den Beschlagaufnahmen aus einem anderen Material oder anders ausgebildete Dampfsperrschichten zu verbauen als bei der Dampfsperrschicht oder den Dampfsperrschichten zum Einsatz kommt, welche parallel zu der Frontfläche liegen. Hierdurch ist es möglich, die Dampfsperrschicht auf die jeweiligen Anforderungen optimal anzupassen. So sind für die Dampfsperrschichten, welche parallel zu der Frontfläche liegen, insbesondere schichtförmige, insbesondere als Folien vorliegende oder sprühbare oder streichbare Materialien vorgesehen, welche bei einer geringen Schichtdicke eine optimale Wirkung entfalten. So sind für die Dampfsperrschichten im Bereich der Randeinfassung und/oder der Materialaufnahme Materialien vorgesehen, welche sich auch in Eck- und Kantenbereichen gut einsetzen lassen.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Weitere Einzelheiten der Erfindung werden in der Zeichnung anhand von schematisch dargestellten Ausführungsbeispielen beschreiben.

Hierbei zeigt:
- Figur 1:: eine erste Ausführungsvariante einer Möbelbauplatte;
- Figur 2:: eine zweite Ausführungsvariante einer Möbelbauplatte;
- Figur 3:: eine dritte Ausführungsvariante einer Möbelbauplatte;
- Figur 4:: eine vierte Ausführungsvariante einer Möbelbauplatte;
- Figur 5:: eine fünfte Ausführungsvariante einer Möbelbauplatte in perspektivische Darstellung mit einer teilweise dargestellten Randeinfassung,
- Figur 6:: eine sechste Ausführungsvariante einer Möbelbauplatte in Schnittansicht und
- Figur 7:: eine realitätsnähere Darstellung der in der Figur 6 gezeigten Schnittansicht der Möbelbauplatte.

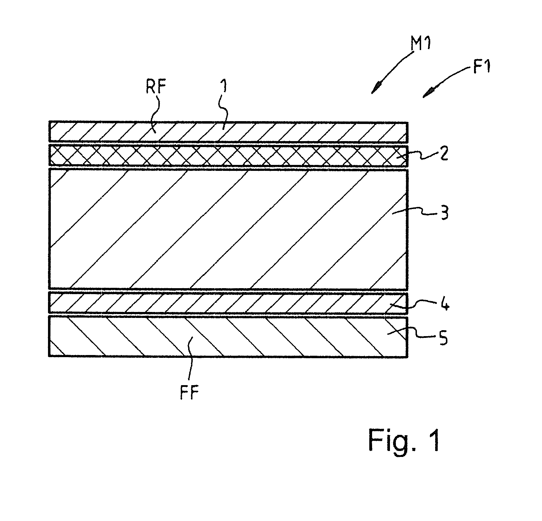

In der Figur 1 ist eine erste Ausführungsvariante einer Möbelbauplatte M1 in geschnittener Ansicht gezeigt. Die Möbelbauplatte M1, welche als Möbelfrontplatte F1 ausgebildet ist, umfasst eine als Rückfläche RF ausgebildete Dekorschicht 1 und darauf aufbauend eine Dampfsperrschicht 2, eine Kernschicht 3, eine Dekorschicht 4 und eine Glasschicht 5 als Frontfläche FF. Die Dampfsperrschicht 2 ist zwischen der Kernschicht 3 und der Dekorschicht 1 angeordnet. Hierdurch ist die Kernschicht 3 zu der Rückfläche RF der Möbelbauplatte M1 vor dem Eindringen von Feuchtigkeit geschützt. Die Möbelbauplatte M1 umfasst auch eine nicht dargestellte Randeinfassung, welche die Kernschicht 3 ringförmig geschlossen umläuft.

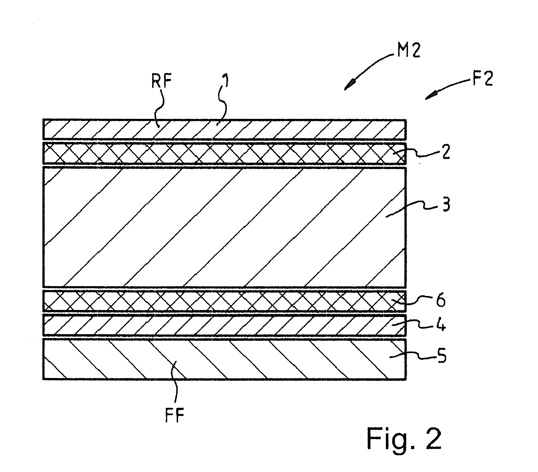

In der Figur 2 ist eine zweite Ausführungsvariante einer Möbelbauplatte M2 in geschnittener Ansicht gezeigt. Die Möbelbauplatte M2, welche als Möbelfrontplatte F2 ausgebildet ist, umfasst eine als Rückfläche RF ausgebildete Dekorschicht 1 und darauf aufbauend eine Dampfsperrschicht 2, eine Kernschicht 3, eine weitere Dampfsperrschicht 6, eine Dekorschicht 4 und eine Glasschicht 5 als Frontfläche FF. Die Dampfsperrschichten 2 und 6 sind zwischen der Kernschicht 3 und der Dekorschicht 1 und zwischen der Kernschicht 3 und der Dekorschicht 4 angeordnet. Hierdurch ist die Kernschicht 3 zu der Rückfläche RF und der Frontfläche FF der Möbelbauplatte M2 vor dem Eindringen von Feuchtigkeit geschützt. Die Möbelbauplatte M2 umfasst auch eine nicht dargestellte Randeinfassung, welche die Kernschicht 3, ringförmig geschlossen umläuft.

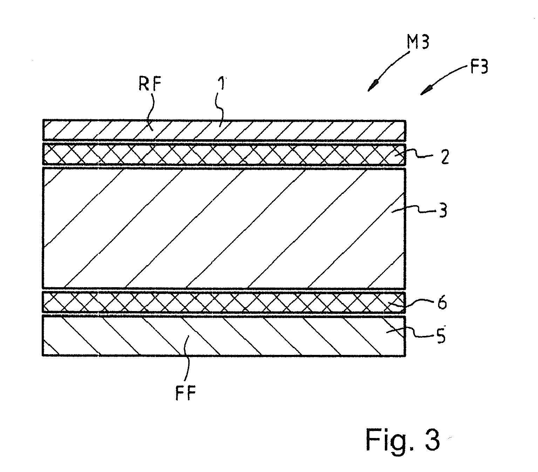

In der Figur 3 ist eine dritte Ausführungsvariante einer Möbelbauplatte M3 in geschnittener Ansicht gezeigt. Die Möbelbauplatte M3, welche als Möbelfrontplatte F3 ausgebildet ist, umfasst eine als Rückfläche RF ausgebildete Dekorschicht 1 und darauf aufbauend eine Dampfsperrschicht 2, eine Kernschicht 3, eine weitere Dampfsperrschicht 6 und eine Glasschicht 5 als Frontfläche FF. Die Dampfsperrschichten 2 und 6 sind zwischen der Kernschicht 3 und der Dekorschicht 1 und zwischen der Kernschicht 3 und der Glasschicht 5 angeordnet. Hierdurch ist die Kernschicht 3 zu der Rückfläche RF und der Frontfläche FF der Möbelbauplatte M3 vor dem Eindringen von Feuchtigkeit geschützt. Die Möbelbauplatte M3 umfasst auch eine nicht dargestellte Randeinfassung, welche die Kernschicht 3, ringförmig geschlossen umläuft.

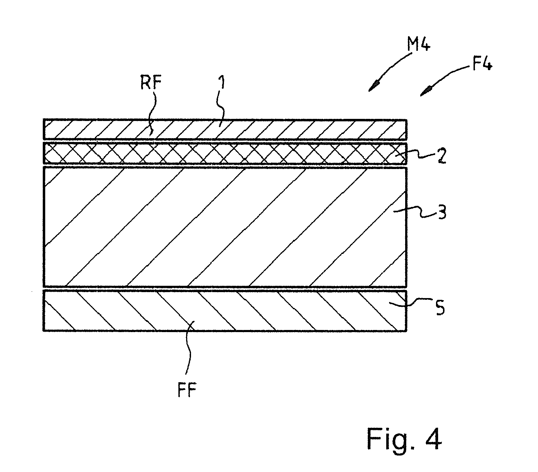

In der Figur 4 ist eine vierte Ausführungsvariante einer Möbelbauplatte M4 in geschnittener Ansicht gezeigt. Die Möbelbauplatte M4, welche als Möbelfrontplatte F4 ausgebildet ist, umfasst eine als Rückfläche RF ausgebildete Dekorschicht 1 und darauf aufbauend eine Dampfsperrschicht 2, eine Kernschicht 3 und eine Glasschicht 5 als Frontfläche FF. Die Dampfsperrschicht 2 ist zwischen der Kernschicht 3 und der Dekorschicht 1 angeordnet. Hierdurch ist die Kernschicht 3 zu der Rückfläche RF der Möbelbauplatte M4 vor dem Eindringen von Feuchtigkeit geschützt. Die Möbelbauplatte M4 umfasst auch eine nicht dargestellte Randeinfassung, welche die Kernschicht 3 ringförmig geschlossen umläuft.

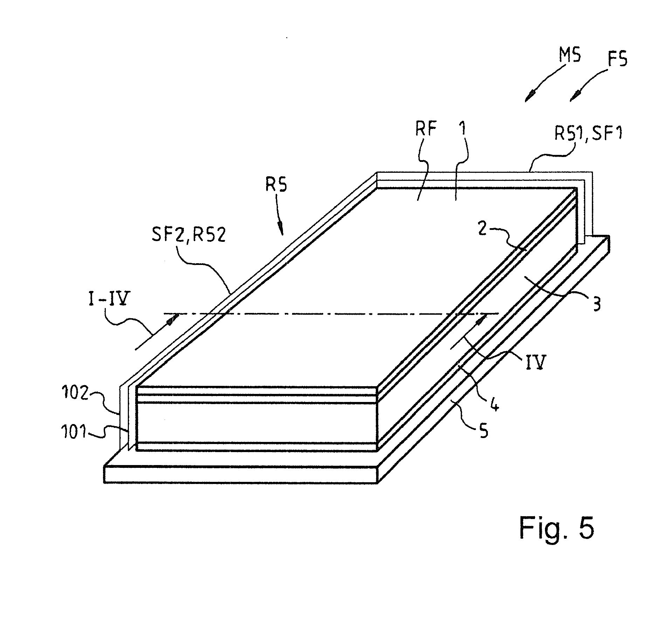

In der Figur 5 ist eine fünfte Ausführungsvariante einer Möbelbauplatte M5 in perspektivische Darstellung mit einer teilweise dargestellten Randeinfassung R5 gezeigt. Bezüglich einer Schichtenfolge entspricht die fünfte Möbelbauplatte M5 der in der Figur 1 gezeigten Möbelbauplatte.

Die Möbelbauplatte M5, welche als Möbelfrontplatte F5 ausgebildet ist, umfasst eine als Rückfläche RF ausgebildete Dekorschicht 1 und darauf aufbauend eine Dampfsperrschicht 2, eine Kernschicht 3, eine Dekorschicht 4 und eine Glasschicht 5 als Frontfläche FF. Von der Randeinfassung R5 sind nur Abschnitte R51 und R52 dargestellt, welche eine hintere Seitenfläche SF1 und eine linke Seitenfläche SF2 bilden. Die Randeinfassung R5 umfasst als innere Schicht eine Dampfsperrschicht 101 und als äußere Schicht eine Dekorschicht 102. gemäß einer nicht dargestellten Ausführungsvariante ist es auch vorgesehen, die Randeinfassung nur aus der Dampfsperrschicht oder nur aus der Dekorschicht zu bilden.

In der Figur 5 ist exemplarisch der Schnittverlauf I-I, II-II, III-III bzw. IV-IV dargestellt, in welchem die Figuren 1 bis 4 gezeigt sind, wobei bei der Möbelbauplatte M5 im Unterschied zu den Möbelbauplatten M1 bis M5 die Glasplatte, welche die Glasschicht 5 bildet, die anderen Schicht in den Längen- und Breitenabmessungen leicht überragt.

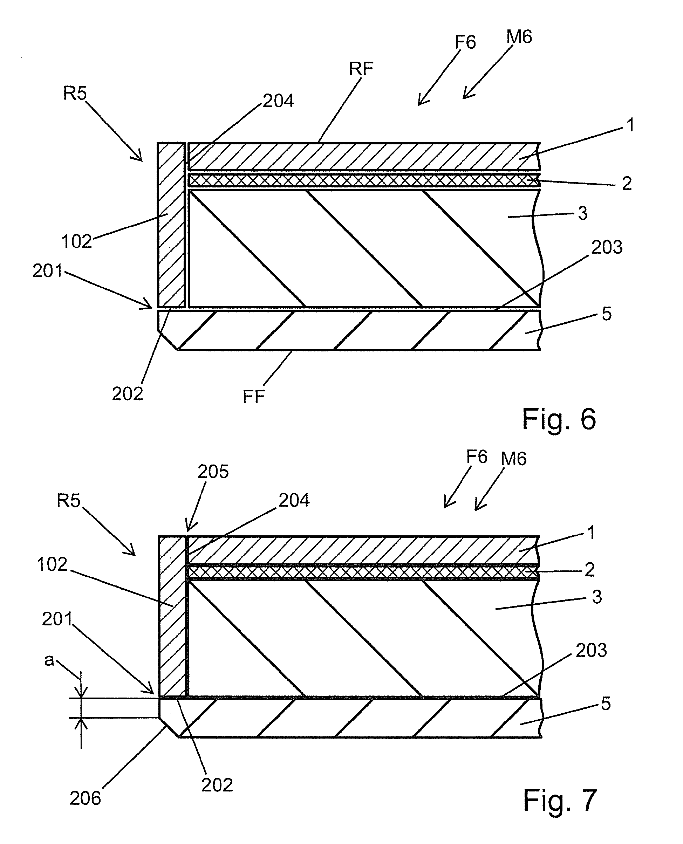

In der Figur 6 ist in schematischer Ansicht eine sechste Ausführungsvariante einer Möbelbauplatte M6 in Schnittansicht gezeigt. Zu einer Frontfläche FF hin weist die Möbelbauplatte M6, welche als Möbelfrontplatte F6 ausgebildet ist, eine Glasschicht 5 auf. Auf die Glasschicht 5 folgt eine Kernschicht 3, welche aus einem Feuchtigkeit aufnehmenden Werkstoff gebildet ist. Auf die Kernschicht 3 folgt - wie dies auch aus den Figuren 4 und 5 bekannt ist - eine Dampfsperrschicht 2 und eine Dekorschicht 1. Die Glasschicht 5 steht unabhängig von ihrer geometrischen Form, welche diese in einer Draufsicht auf die Frontfläche aufweist, umlaufend über die beschriebenen, dahinter liegenden Schichten über. Durch die Anordnung einer die dahinter liegenden Schichten umlaufenden Randeinfassung R5 wird zu der Glasschicht 5 ein flächenbündiger Übergang 201 hergestellt, wobei die Randeinfassung R5 mit einer Stoßfläche 202 an einer der Frontfläche FF abgewandten Unterseite 203 der Glasschicht 5 anliegt. Die Stoßfläche 202 liegt parallel zu der Frontfläche FF. Auch an der die Rückfläche RF bildenden Dekorschicht 1 liegt die Randeinfassung R5 mit einer Stoßfläche 204 an, wobei die Stoßfläche 204 senkrecht zu der Frontfläche FF bzw. zu der Rückfläche RF orientiert ist. Die Randeinfassung R5 wird durch eine Dekorschicht 102 gebildet. Bei einer quaderförmigen Möbelbauplatte umfasst die Dekorschicht entweder vier Dekorplatten, welche jeweils eine Seitenfläche der Möbelbauplatte abdecken, oder ein Dekorband, welches die Möbelbauplatte umläuft und dessen Enden miteinander verbunden sind. Hierbei erfolgt eine Verbindung der Dekorplatten oder des Dekorbandes dadurch, dass auf Gehrung geschnittene Enden in einem Eckbereich zusammentreffen oder dadurch, dass Enden außerhalb der Eckbereiche stumpf aufeinandertreffen, wobei die Enden miteinander verbunden sind. Hierbei erfolgt eine Verbindung durch Verschweißen oder Verkleben. Auch die Verbindungen zwischen den einzelnen Schichten sind durch Verschweißen oder Verkleben ausgeführt. In der Figur 6 sind die einzelnen Bauteile, wie auch in den Figuren 1 bis 4 leicht beabstandet gezeigt, um diese besser auseinander halten zu können.

Die Figur 7 zeigt in schematischer Darstellung einen der Figur 6 entsprechenden Schnitt durch die Möbelbauplatte M6 bei miteinander verbundenen Bauteilen. Insofern wird hier auch auf die Beschreibung zur Figur 6 verwiesen. Die erwähnten Verbindungen sind hier nicht körperlich dargestellt, da diese z.B. mit dünnen Klebschichten erfolgen, durch welche die Dimensionen der Möbelbauplatte M6 praktisch nicht beeinflusst werden. Auch zwischen der Dekorschicht 1 und der Dekorschicht 2 ist ein flächenbündiger Übergang 205 ausgebildet. Die Glasschicht 5 weist eine umlaufende Fase 206 auf, welche mit einem Abstand a von dem flächenbündigen Übergang 201 beabstandet ist, so dass eine Erhöhung einer Schlagempfindlichkeit des Übergangs 201 vermieden ist.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- M1 - M6: Möbelbauplatte
- F1 - F6: Möbelfrontplatte
- FF: Frontfläche
- RF: Rückfläche

- 1: Dekorschicht
- 2: Dampfsperrschicht
- 3: Kernschicht
- 4: Dekorschicht
- 5: Glasschicht 5
- 6: weitere Dampfsperrschicht

- R5: Randeinfassung
- R51, R52: Abschnitt von R5
- SF1: hintere Seitenfläche
- SF2: linke Seitenfläche
- 101: Dampfsperrschicht
- 102: Dekorschicht

- 201: flächenbündiger Übergang
- 202: Stoßfläche zwischen 102 und 5
- 203: Unterseite von 5
- 204: Stoßfläche zwischen 102 und 1
- 205: flächenbündiger Übergang
- 206: umlaufende Fase von 5

## Patentansprüche

1. Möbelbauplatte (M1 - M6), insbesondere Möbelfrontplatte (F1
- F6) umfassend
- eine Kernschicht (3),
- mindestens eine Dekorschicht (1, 4),
- mindestens eine Glasschicht (5) oder dergleichen und
- mindestens eine Dampfsperrschicht (2, 6),
- wobei die Dampfsperrschicht (2, 6) bzw. mindestens eine der Dampfsperrschichten (2, 6) zwischen der Kernschicht (3) und der Dekorschicht (1, 4) bzw. einer der Dekorschichten (1, 4) angeordnet ist.

2. Möbelbauplatte nach Anspruch 1, **dadurch gekennzeichnet, dass** die Möbelbauplatte (M1 - M6) eine Randeinfassung (R5) umfasst,
- wobei die Randeinfassung (R5) die Kernschicht (3) und die Dekorschicht (1), welche eine Rückfläche (RF) bildet,
- und insbesondere auch die Dampfsperrschicht (2), welche zwischen der die Rückfläche (RF) bildenden Dekorschicht (1) und der Kernschicht (3) liegt,
- und insbesondere auch die Dampfsperrschicht (6), welche zwischen der Glasschicht (5) und der Kernschicht (3) liegt,
- und insbesondere auch die Dekorschicht (4), welche zwischen der Glasschicht (5) und der Kernschicht (3) liegt, derart umläuft,
- dass die Randeinfassung (R5) zwischen einer Frontfläche (FF) und der Rückfläche (RF) alle Seitenflächen (SF1, SF2) der Möbelbauplatte (M1 - M6) bildet,
- wobei die Randeinfassung (R5) insbesondere eine Dampfsperrschicht (101) und eine Dekorschicht (102) und/oder eine Glasschicht umfasst.

3. Möbelbauplatte nach Anspruch 2, **dadurch gekennzeichnet, dass** die Dekorschicht (102) und/oder die Glasschicht der Randeinfassung (R5) flächenbündig in die Glasschicht (5) übergeht und mit einer Stoßfläche (202) an der Glasschicht (5) anliegt, wobei die Stoßfläche (202), mit welcher die Dekorschicht (102) und/oder die Glasschicht der Randeinfassung (R5) an der Glasschicht (5) anliegt, parallel zu der Frontfläche (FF) der Möbelbauplatte (M6) ausgerichtet ist, und dass die Dekorschicht (102) und/oder die Glasschicht der Randeinfassung (R5) flächenbündig in die die Rückfläche (RF) bildende Dekorschicht (1) übergeht, wobei eine Stoßfläche (204), mit welcher die Dekorschicht (102) und/oder die Glasschicht der Randeinfassung (R5) an der die Rückfläche (RF) bildenden Dekorschicht (1) anliegt, orthogonal zu der Frontfläche (FF) der Möbelbauplatte (M6) ausgerichtet ist.

4. Möbelbauplatte nach Anspruch 2 oder 3, **dadurch gekennzeichnet, dass** die Glasschicht (5) eine umlaufende Fase (F5) aufweist, wobei die Fase (205) umlaufend wenigstens 1 mm von der Randeinfassung (R5) beabstandet ist.

5. Möbelbauplatte nach wenigstens einem der vorhergehenden Ansprüche, **dadurch gekennzeichnet, dass** zwischen der Kernschicht (3) und der die Kernschicht (3) umlaufenden Dekorschicht (102) oder der die Kernschicht (3) umlaufenden Glasschicht die Dampfsperre (101) derart umlaufend angeordnet ist, dass diese eine umlaufende Seitenfläche der Kernschicht (3) vollständig überdeckt.

6. Möbelbauplatte nach einem der vorhergehenden Ansprüche, **dadurch gekennzeichnet, dass** die Möbelbauplatte (M1 - M6) wenigstens eine Beschlagaufnahme umfasst, wobei die Beschlagaufnahme durch eine Dampfsperrschicht gegenüber der Kernschicht abgedichtet ist.

7. Möbelbauplatte nach einem der Ansprüche 1 bis 6, **dadurch gekennzeichnet, dass** die Möbelbauplatte (M1; M5) als Rückfläche (RF)
- eine Dekorschicht (1) und darauf aufbauend
- eine Dampfsperrschicht (2),
- eine Kernschicht (3),
- eine Dekorschicht (4) und
- eine Glasschicht (5) als Frontfläche (FF) umfasst.

8. Möbelbauplatte nach einem der Ansprüche 1 bis 6, **dadurch gekennzeichnet, dass** die Möbelbauplatte (M2) als Rückfläche (RF)
- eine Dekorschicht (1) und darauf aufbauend
- eine Dampfsperrschicht (2),
- eine Kernschicht (3),
- eine Dampfsperrschicht (6),
- eine Dekorschicht (4) und
- eine Glasschicht (5) als Frontfläche (FF) umfasst.

9. Möbelbauplatte nach einem der Ansprüche 1 bis 6, **dadurch gekennzeichnet, dass** die Möbelbauplatte (M3) als Rückfläche (RF)
- eine Dekorschicht (1) und darauf aufbauend
- eine Dampfsperrschicht (2),
- eine Kernschicht (3),
- eine Dampfsperrschicht (6) und
- eine Glasschicht (5) als Frontfläche (FF) umfasst.

10. Möbelbauplatte nach einem der Ansprüche 1 bis 6, **dadurch gekennzeichnet, dass** die Möbelbauplatte (M4) als Rückfläche (RF)
- eine Dekorschicht (1) und darauf aufbauend
- eine Dampfsperrschicht (2),
- eine Kernschicht (3) und
- eine Glasschicht (5) als Frontfläche (FF) umfasst.

11. Möbelbauplatte nach einem der vorhergehenden Ansprüche, **dadurch gekennzeichnet, dass** die wenigstens eine Glasschicht (5) als beschichtete Glasschicht oder als bezüglich ihrer Farbgebung und/oder Struktur und/oder Lichtdurchlässigkeit behandelte Glasschicht ausgebildet ist.

12. Möbelbauplatte nach einem der vorhergehenden Ansprüche, **dadurch gekennzeichnet, dass** die Kernschicht (3) als Holzplatte oder als MDF-Platte oder als Pressspanplatte ausgebildet ist oder dass die Kernschicht als Wabenplatte aus einem Faserstoff und/oder einem Metall, insbesondere Aluminium und/oder aus Kunststoff und/oder aus einem geschäumten Stoff ausgebildet ist oder dass die Kernschicht als Sandwichplatte ausgebildet ist.

13. Möbelbauplatte nach einem der vorhergehenden Ansprüche, **dadurch gekennzeichnet, dass** die Dampfsperrschicht (2, 6) als Metallschicht, insbesondere Aluminiumschicht bzw. Aluminiumbeschichtung oder als Kunststoffschicht oder als Membranschicht ausgebildet ist.

14. Möbelbauplatte nach einem der vorhergehenden Ansprüche, **dadurch gekennzeichnet, dass** die Dekorschicht (1, 4) als Kunststoffschicht und insbesondere als Polyethylen-Schicht ausgebildet ist.

15. Möbelbauplatte nach einem der vorhergehenden Ansprüche, **dadurch gekennzeichnet, dass** die in der Randeinfassung (R5) verbaute Dampfsperrschicht (101) und/oder die in der Beschlagaufnahme verbaute Dampfsperrschicht aus einem Material gebildet sind oder anders aufgebaut sind, als die Dampfsperrschicht (2, 6) oder die Dampfsperrschichten (2, 6), welche parallel zu der Frontfläche verbaut sind.
